(19) Europäisches Patentamt

European Patent Office

Office européen des brevets

(11) **EP 3 003 812 B1**

(12) **FASCICULE DE BREVET EUROPEEN**

(45) Date de publication et mention de la délivrance du brevet:
**23.09.2020 Bulletin 2020/39**

(21) Numéro de dépôt: **14727741.2**

(22) Date de dépôt: **15.05.2014**

(51) Int Cl.:
**B60W 30/16** *(2020.01)* **B60W 30/12** *(2020.01)*
**B60W 50/14** *(2020.01)* **B60W 50/00** *(2006.01)*
**B60K 28/06** *(2006.01)*

(86) Numéro de dépôt international:
**PCT/EP2014/059902**

(87) Numéro de publication internationale:
**WO 2014/191209 (04.12.2014 Gazette 2014/49)**

(54) **PROCEDE DE FONCTIONNEMENT D'UN VEHICULE EN MODE MANUEL ET EN MODE AUTONOME**

BETRIEBSVERFAHREN FÜR EIN FAHRZEUG IN EINEM MANUELLEN MODUS UND EINEM AUTONOMEN MODUS

OPERATING METHOD FOR A VEHICLE IN MANUAL MODE AND IN AUTONOMOUS MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2013 FR 1354744**

(43) Date de publication de la demande:
**13.04.2016 Bulletin 2016/15**

(73) Titulaire: **Renault S.A.S.**
**92100 Boulogne-Billancourt (FR)**

(72) Inventeurs:
• **DESNOYER, François**
**F-75014 Paris (FR)**
• **LANGLOIS, Sabine**
**F-75015 Paris (FR)**
• **LAVABRE, Marc**
**F-92420 Vaucresson (FR)**

(56) Documents cités:
**EP-A1- 2 314 490    DE-A1-102011 082 375**
**FR-A1- 2 915 164**

**Description**

L'invention concerne un procédé et un système automatisé pour superviser un fonctionnement de véhicule en mode manuel et en mode autonome de conduite.

Les systèmes d'aide à la conduite, par exemple les régulateurs de vitesse à contrôle de distance, permettent à un conducteur humain de se décharger d'une partie de son activité de conduite sur des systèmes automatisés. Ces systèmes sont actuellement largement répandus sur le marché, et leurs fonctions sont progressivement associées les unes aux autres pour rendre le véhicule complètement autonome. Un tel type de véhicule permet au conducteur de bénéficier de services de délégation de conduite sur toute ou partie de la durée de son parcours. Ces services de délégation de conduite peuvent notamment être proposés lorsque les conditions de trafic sont denses et la vitesse moyenne du véhicule suffisamment basse. La manière dont le conducteur délègue la conduite et dont le système rend la main au conducteur sont tout à fait essentielles pour la qualité de la prestation, ainsi que pour la sûreté de fonctionnement du système. Il existe des procédures d'activation et de désactivation de systèmes de contrôle longitudinal du véhicule comme dans le cas d'un régulateur de vitesse ou d'un système à contrôle de distance. Il existe aussi des procédures d'activation et de désactivation de systèmes de contrôle latéral comme ceux de détection de franchissement de ligne ou de maintien de trajectoire. Pour chacun de ces systèmes pris séparément, il est assez facile pour le conducteur de savoir si c'est lui qui a le contrôle ou si c'est l'automatisme. Un système de véhicule autonome du type auquel s'applique l'invention, propose de coupler le contrôle longitudinal du véhicule avec le contrôle latéral. Le mode autonome est réservé aux zones dans lesquelles les conditions de trafic sont compatibles avec une absence de contrôle humain. Les zones sont définies par ailleurs pour éviter au maximum que l'utilisation du mode autonome n'y crée un danger ou une situation anxiogène.

Pour illustrer l'état antérieur de la technique, le document US8352110 divulgue une interface utilisateur pour afficher un état interne de système de conduite autonome. En mode manuel, l'interface indique à l'utilisateur que le système est prêt à fonctionner en mode autonome en fonction de différentes informations comprenant notamment une localisation géographique du véhicule. Le procédé et le système divulgués présentent cependant plusieurs problèmes parmi lesquels celui de maintenir le véhicule en sécurité lorsque prend fin une zone dans laquelle le mode autonome est possible alors que le conducteur humain a délégué sa vigilance de conduite au système automatisé. EP-A-2 314 490 divulgue un procédé selon le préambule de la revendication 1.

L'invention a pour objet un procédé de fonctionnement d'un véhicule comportant au moins une étape de conduite en mode manuel dans laquelle un déplacement longitudinal et un déplacement latéral sont contrôlés par un conducteur humain et au moins une étape de conduite en mode autonome dans laquelle le déplacement longitudinal et le déplacement latéral sont contrôlés par un système automatisé.

Pour répondre aux problèmes de l'état antérieur de la technique, une étape d'alerte du conducteur humain est activée au moins en mode autonome lorsque le système automatisé reçoit une première distance qui sépare le véhicule d'une fin de zone dans laquelle le mode autonome est autorisé.

Une étape d'arrêt automatique du véhicule avant d'atteindre la fin de zone, est activée en mode autonome lorsque le conducteur humain ne reprend pas en main le contrôle du véhicule après réception de ladite première distance par le système automatisé.

De préférence, le système automatisé calcule une deuxième distance permettant d'arrêter le véhicule en fonction d'une décélération accédée et/ou calculée par le système automatisé pour être utilisée dans l'étape d'arrêt automatique.

Avantageusement, l'étape d'arrêt automatique du véhicule est activée lorsque ladite première distance est inférieure ou égale à ladite deuxième distance.

Selon l'invention, ladite deuxième distance est calculée à partir d'une vitesse maximale autorisée sur ladite première distance.

Pour illustrer l'état antérieur de la technique, le document US8352110 divulgue une interface utilisateur pour afficher un état interne de système de conduite autonome. En mode manuel, l'interface indique à l'utilisateur que le système est prêt à fonctionner en mode autonome en fonction de différentes informations comprenant notamment une localisation géographique du véhicule. Le procédé et le système divulgués présentent cependant plusieurs problèmes parmi lesquels celui de maintenir le véhicule en sécurité lorsque prend fin une zone dans laquelle le mode autonome est possible alors que le conducteur humain a délégué sa vigilance de conduite au système automatisé.

Le document EP2314490 divulgue un procédé de commande du fonctionnement d'un système d'assistance totalement automatique dans lequel, à l'entrée d'au moins une condition de prise en charge, il apparaît une invitation de prise en charge par le conducteur qui mène à une désactivation du système d'assistance au conducteur.

L'invention a pour objet un procédé de fonctionnement d'un véhicule comportant au moins une étape de conduite en mode manuel dans laquelle un déplacement longitudinal et un déplacement latéral sont contrôlés par un conducteur humain et au moins une étape de conduite en mode autonome dans laquelle le déplacement longitudinal et le déplacement latéral sont contrôlés par un système automatisé.

Pour répondre aux problèmes de l'état antérieur de la technique, une étape d'alerte du conducteur humain est activée au moins en mode autonome lorsque le système automatisé reçoit une première distance qui sépare le véhicule d'une fin de zone dans laquelle le mode autonome est autorisé.

Une étape d'arrêt automatique du véhicule avant d'atteindre la fin de zone, est activée en mode autonome lorsque le conducteur humain ne reprend pas en main le contrôle du véhicule après réception de ladite première distance par le système automatisé.

De préférence, le système automatisé calcule une deuxième distance permettant d'arrêter le véhicule en fonction d'une décélération accédée et/ou calculée par le système automatisé pour être utilisée dans l'étape d'arrêt automatique.

Avantageusement, l'étape d'arrêt automatique du véhicule est activée lorsque ladite première distance est inférieure ou égale à ladite deuxième distance.

Particulièrement, ladite deuxième distance est calculée à partir d'une vitesse maximale autorisée sur ladite première distance.

Particulièrement aussi, ladite décélération est de valeur calibrée constante pour le véhicule et ladite deuxième distance comprend une première longueur proportionnelle à un carré de vitesse du véhicule et inversement proportionnelle au double de ladite décélération.

Plus particulièrement, ladite deuxième distance comprend une deuxième longueur fixe ajoutée à ladite première longueur.

Un agrément apporté en supplément par le procédé résulte de ce que ladite décélération est de valeur suffisamment faible pour ne pas nuire au confort des passagers du véhicule.

L'invention a aussi pour objet un programme d'ordinateur comprenant des instructions de code de programme pour l'exécution des étapes du procédé selon l'invention lorsque ledit programme est exécuté sur un ordinateur.

L'invention a encore pour objet un système automatisé comprenant un ordinateur dans lequel est installé un programme d'ordinateur selon l'invention.

L'invention a enfin pour objet un véhicule, notamment un véhicule automobile, comprenant un système automatisé selon l'invention.

L'invention sera mieux comprise à l'aide d'exemples de mise en œuvre d'étapes de procédé conforme à l'invention en référence aux dessins annexés, dans lesquels :

- la figure 1 montre des étapes de procédé conforme à l'invention en mode manuel ;
- la figure 2 montre des étapes de procédé conforme à l'invention en mode autonome ;
- la figure 3 montre des étapes de procédé conforme à l'invention en mode semi autonome.

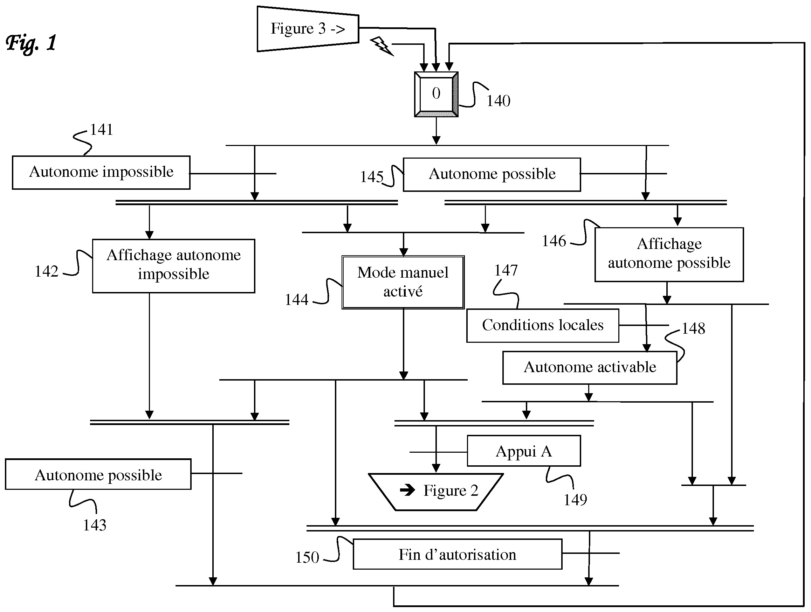

Dans le procédé de fonctionnement d'un véhicule expliqué en référence à la figure 1, une étape 144 de conduite en mode manuel consiste à laisser un conducteur humain contrôler un déplacement longitudinal et un déplacement latéral du véhicule. Le déplacement longitudinal est alors contrôlé de manière habituelle au moyen d'organes de commande manuelle de vitesse du véhicule tels que les pédales d'accélérateur et de freins Le déplacement latéral est de même contrôlé de manière habituelle au moyen d'organes de commande manuelle de direction du véhicule tels que le volant.

L'étape 144 reproduit ainsi un fonctionnement habituel de véhicule qui, en absence de l'invention pourrait en quelque sorte être constamment activée.

Un véhicule, notamment un véhicule automobile conforme à l'invention, comprend un système automatisé dans lequel des actionneurs de commande automatique, connus par ailleurs, sont pilotés par un ordinateur dans lequel est installé un programme d'ordinateur comprenant des instructions de code de programme pour l'exécution des étapes du procédé expliqué ci-dessous lorsque le programme est exécuté sur l'ordinateur. L'ordinateur est typiquement un calculateur embarqué dans le véhicule, capable de communiquer avec d'autres calculateurs embarqués via un réseau de terrain tel qu'un réseau CAN, LIN ou autre et de communiquer optionnellement mais non nécessairement avec des équipements distants tels que des satellites de positionnement associés à un appareil embarqué de navigation ou tels que des bases de données centralisées accessibles par un appareil de télécommunication.

Le procédé est à présent expliqué au moyen d'une représentation grafcet dans laquelle on rappelle qu'une transition à la suite d'une ou plusieurs étapes précédentes, est validée par une détection d'un ou plusieurs événements prédéfinis lorsque tout ou partie de ladite ou desdites étapes précédentes sont actives et qu'une validation de ladite transition active une ou plusieurs étapes suivantes et désactive ladite ou lesdites étapes précédentes, conformément aux conventions de représentation grafcet. On comprendra que cette représentation a été choisie pour la clarté qu'elle procure et qu'elle n'est en rien limitative. Une représentation sous forme d'organigramme informatique, de circuit logique combinatoire ou de tout autre mécanisme matériel, est de manière identique couvert par les explications qui vont suivre, le procédé n'étant pas limité au-delà des actions qui sont exécutées dans les étapes qui lui sont essentielles et des conditions à l'exécution de ces actions.

Dans le procédé mis en œuvre par exemple en faisant intervenir le système automatisé indiqué ci-dessus, l'étape 144 de conduite en mode manuel est de préférence activée par défaut à partir d'une étape initiale 140, quelques soient les modes de conduite possibles, au démarrage du véhicule par le conducteur humain.

A partir de l'étape 140, une transition 145 est validée lorsque la conduite du véhicule en mode autonome est possible et une transition 141 est validée lorsqu'à l'inverse, la conduite du véhicule en mode autonome n'est pas possible.

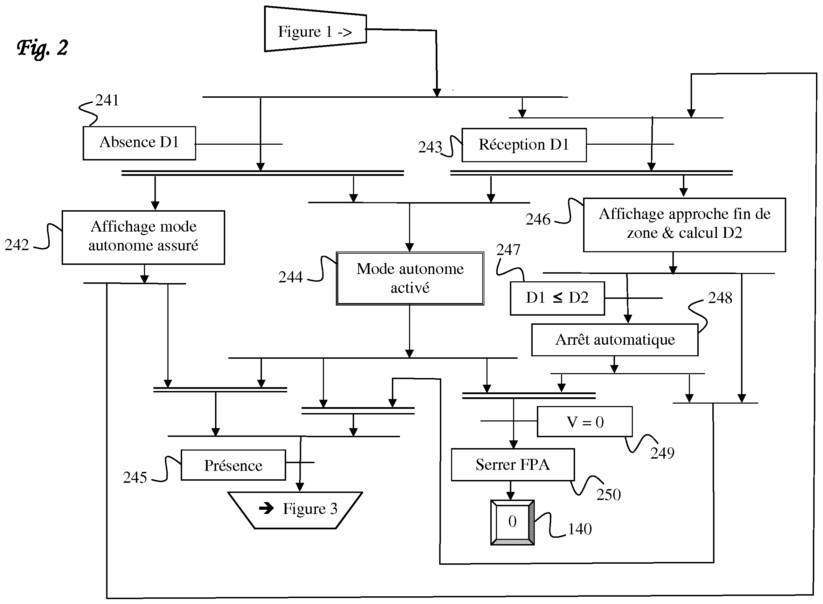

Les étapes à présent décrites en référence à la figure 1, ont pour rôle essentiel de superviser un passage de mode manuel de conduite vers un mode autonome de conduite expliqué plus tard en référence à la figure 2. Dans le mode autonome de conduite, le déplacement longitudinal et le déplacement latéral du véhicule sont contrôlés par le système automatisé sans intervention du conducteur humain.

Les conditions de validation de la transition 145 sont par exemple consignées dans une table en mémoire du système automatisé. A titre purement illustratif et non exhaustif, elles peuvent comprendre une condition de vitesse du véhicule inférieure à un seuil prédéfini, une localisation du véhicule dans une zone appropriée à la conduite en mode autonome, estimée en coordination avec la centrale de navigation du véhicule.

Parallèlement à l'étape 144 de mode manuel activé qui est activée quelle que soit celle des transitions 141 et 145 qui est validée, une étape 146 d'affichage de conduite en mode autonome possible est activée lorsque la transition 145 est validée et une étape 142 d'affichage de conduite en mode autonome impossible est activée lorsque la transition 141 est validée. Le terme d'affichage dans les étapes 142 et 146, à prendre dans son acception la plus large, peut désigner tant une signalisation visuelle que sonore, permanente ou à la demande qu'une simple absence de signalisation en étape 142 par exemple tant que la signalisation de l'étape 146 n'est pas présente.

A partir d'une conjonction logique de l'étape 142 et de l'étape 144, une transition 143 est validée lorsque la conduite du véhicule en mode autonome devient possible. A partir d'une conjonction logique de l'étape 146 et de l'étape 144, une transition 150 est validée lorsqu'un passage de conduite du véhicule en mode autonome n'est plus autorisé. La fin d'autorisation de passage en mode autonome qui valide la transition 150 peut résulter d'une fin de mode autonome possible ; elle peut résulter aussi d'autres événements comme nous le verrons par la suite.

Une disjonction logique de validation de la transition 143 ou de la transition 150, réactive l'étape initiale 140 pour ré-aiguiller l'automatisme dans la branche du mode manuel de fonctionnement qui convient.

A partir de l'étape 146 activée sous stipulation de mode autonome possible, une transition 147 est validée lorsque les conditions locales au véhicule sont réunies. A titre illustratif, le contrôle latéral de trajectoire avec suivi de repères sur la chaussée en exécution, constitue une condition locale à la substitution du contrôle de direction par le conducteur humain. Une absence de couple appliqué au volant par le conducteur humain rendu possible, notamment par une trajectoire en ligne droite, constitue aussi une condition locale à la substitution du contrôle de direction par le conducteur humain. A titre illustratif encore, le régulateur de vitesse activé avec consigne en provenance de la centrale de navigation pour le respect des limitations de vitesse, constitue une condition locale à la substitution du contrôle d'accélération par le conducteur humain. Le système de détection de collision en relation avec divers capteurs de proximité d'obstacles, radars et/ou caméra, pour abaisser la consigne de vitesse de façon à maintenir une distance non nulle avec l'obstacle, fixe ou mobile, constitue aussi une condition locale à la substitution du contrôle d'accélération par le conducteur humain. L'appui sur la pédale de frein étant à tout moment prioritaire sur les autres organes, automatiques ou manuels, pour raison de sécurité, un lâché de la pédale d'accélérateur renforce ou confirme les conditions locales à réunir pour permettre de passer effectivement en mode autonome.

Une validation de la transition 147 active une étape 148 de mode autonome activable. Dans l'étape 148, le système automatisé signale au conducteur humain qu'il est prêt à prendre le contrôle de la conduite du véhicule et lui demande de confirmer sans ambiguïté possible, sa volonté de transmettre la totalité du contrôle du véhicule au système automatisé en mode autonome. Tant que le conducteur humain ne confirme pas clairement sa volonté de quitter le mode manuel, l'ordinateur du système automatisé prend en compte les commandes du conducteur humain qui en résultent pour piloter les actionneurs de commande automatique. Simultanément, l'ordinateur du système automatisé arme une temporisation pour mesurer la durée pendant laquelle le conducteur humain maintient ses mains sur le volant ou son pied sur l'une des pédales.

Si la durée mesurée atteint un délai prédéfini, généralement très court de l'ordre de la seconde, la transition 150 est validée de façon à ce que la confirmation par le conducteur humain de passage en mode autonome, soit à brève échéance après la réunion des conditions locales qui permettent de quitter le mode manuel. Il est préférable de ne pas passer en mode autonome trop tard, à un moment qui pourrait surprendre le conducteur humain ou qui ne serait plus en accord avec les conditions de passage en mode autonome à l'instant auquel les conditions locales sont réunies.

A partir d'une conjonction logique de l'étape 148 et de l'étape 144, une transition 149 est validée lorsque le conducteur humain formule explicitement sa demande de passer en mode autonome. La réception dans le système automatisé, d'un signal indiquant une volonté explicite du conducteur humain de passer en mode autonome, peut résulter d'un appui sur un bouton A, d'un déplacement de manette au volant par le conducteur humain, d'une sélection sur un écran tactile, d'une reconnaissance vocale univoque d'un ordre oral prononcé par le conducteur humain accompagnée possiblement d'une séquence de confirmation, ou de toute autre commande clairement volontaire du conducteur humain demande explicite de passer en mode autonome.

Une validation de la transition 149 active alors l'étape 244 de conduite en mode autonome expliqué maintenant en référence à la figure 2.

Dans le mode autonome de conduite, le système automatisé assure la totalité du contrôle tant du déplacement longitudinal que du déplacement latéral du véhicule en vue de reposer les membres inférieurs et supérieurs du conducteur humain et de le libérer de certaines tâches fastidieuses comme celles de fixer constamment son compteur de vitesse et les panneaux routiers pour s'assurer de ne pas enfreindre une limitation.

Le conducteur humain peut poser ses pieds où bon lui semble comme avec un régulateur de vitesse classique. A la différence d'un régulateur de vitesse classique pour lequel la consigne de vitesse est positionnée par le conducteur humain puis maintenue constante jusqu'à ce que le conducteur humain la modifie, la consigne de vitesse est ici adaptée en fonction des limitations de vitesse indiquées par les cartographies de l'appareil de navigation et de la vitesse d'un véhicule précédent dont la distance est évaluée par un télémètre radar ou une caméra.

De même, le conducteur humain peut poser ses mains où bon lui semble car le contrôle de trajectoire et de stabilité classique est agrémenté d'un mécanisme de reconnaissance de voie sur la chaussée par une caméra en combinaison avec un parcours donné par l'appareil de navigation.

Le mode autonome illustré par la figure 2 comprend d'une part une étape 242 d'affichage de mode autonome assuré, activée par une transition 241 qui est validée tant que la fin de la zone dans laquelle le véhicule peut circuler en mode autonome de manière sécuritaire, n'est pas connue.

L'exemple de mode autonome illustré par la figure 2 comprend d'autre part une étape 246 d'affichage d'approche de fin de zone, activée par une transition 243 qui est validée lorsque le système automatisé reçoit une valeur de distance D1 qui sépare le véhicule da la fin de la zone dans laquelle le mode autonome est autorisé. La valeur de distance D1 est par exemple donnée par une centrale de navigation de type GPS ou autre qui dispose d'une cartographie routière et des conditions de circulation routières. A titre illustratif, on peut mentionner les situations dans lesquelles la centrale de navigation identifie la fin de zone de conduite déléguée, qui correspond à une pénétration dans une autre zone dans laquelle le trafic se fluidifie ou bien dans laquelle l'infrastructure se modifie : péage, sortie d'autoroute, ou encore correspond à la présence d'un incident sur le parcours : travaux, accident ou autre.

L'étape 246 permet d'alerter le conducteur humain pour qu'il s'apprête à reprendre bientôt en main le véhicule. On peut prévoir à titre optionnel d'afficher en permanence la distance D1 qui décroît en temps réel au fur et à mesure que le véhicule se rapproche de la fin de zone de façon à faciliter au conducteur humain sa prise de décision quant à sa reprise en main du véhicule, en d'autres termes quant au repassage en mode manuel.

En tout état de cause, le système automatisé reçoit en temps réel la valeur de distance D1 de façon à calculer en étape 246, une distance D2 qui permet un arrêt en douceur du véhicule en fin de zone pour le cas où le conducteur humain n'aurait pas repris en main le véhicule avant la fin de zone.

Dans ce but, le système automatisé contient en mémoire une décélération calibrée à une valeur suffisamment faible pour ne pas nuire au confort des passagers du véhicule. La valeur de calibration de la décélération est aussi suffisamment élevée pour être perceptible par le conducteur humain de façon à éveiller son attention et à ne pas nécessiter une distance D2 trop longue pour s'arrêter. Un bon compromis est obtenu avec une valeur de décélération de 1 m/s². On comprendra que cette valeur peut sensiblement être différente dans une plage qui varie entre 0,7 m/s² et 1,6 m/s² sans nuire au comportement attendu du véhicule.

Le système automatisé accède à la valeur de décélération y calibrée contenue en mémoire ou calcule une valeur de décélération dans une plage prédéterminée. En parallèle, le système automatisé demande à la centrale de navigation une valeur maximale $V_{max}$ de vitesse autorisée sur la distance D1 qui sépare le véhicule de la fin de zone de façon à calculer la distance D2 d'arrêt en fin de zone.

Par exemple, avec une valeur calibrée constante de décélération pour le véhicule, le système automatisé calcule une première longueur de distance D2 d'arrêt, proportionnelle à un carré de vitesse du véhicule et inversement proportionnelle au double de ladite décélération :

$$D2 := \frac{V_{max}^2}{2 \cdot \gamma}$$

Pour garantir une marge d'erreur, le système automatisé peut majorer la valeur précédemment obtenue, par exemple de sensiblement 10% :
D2 := 1,1 D2

Lorsque mieux vaut s'arrêter avant qu'après la fin de zone, le système automatisé ajoute une deuxième longueur fixe ε, par exemple de 10 mètres, à D2.

$$D2 := D2 + \varepsilon.$$

Tant que l'étape 246 est active, une transition 248 est validée lorsque la distance D1 de fin de zone devient inférieure ou égale à la distance D2 d'arrêt.

Ainsi, une validation de la transition 248 permet d'activer une étape 248 d'arrêt automatique du véhicule avant d'atteindre la fin de zone, lorsque le conducteur humain ne reprend pas en main le contrôle du véhicule après que le système automatisé ait reçu la distance D1, de manière à éviter de continuer à circuler en mode autonome en dehors de la zone d'autorisation.

Dans l'étape 248, le système automatisé ralentit le véhicule en lui appliquant en mode autonome la décélération calibrée définie ci-dessus.

De la sorte, si une reprise en main du conducteur humain n'est pas détectée lorsque le seuil de distance D2 est atteint ou franchi, le système automatisé déclenche une procédure d'arrêt automatique qui amène le véhicule à l'arrêt tout en maintenant le contrôle latéral actif. L'affichage visuel sur les écrans et le déclenchement d'une alarme sonore préviennent le conducteur humain. La mise en route des feux de détresse (warnings en anglais) extérieurs permet aux autres usagers de la route d'être informés du comportement du véhicule

Une transition 249 est validée lorsque le véhicule atteint une vitesse nulle.

Une validation de la transition 249 active une étape 250 qui consiste à serrer le frein de parking automatique et à retourner dans l'étape initiale 140.

Par contre, si une reprise en main par le conducteur humain est constatée avant ou pendant la procédure d'arrêt automatique de l'étape 248, alors le procédé rend la main au conducteur par exemple mais non nécessairement de la manière expliquée à présent.

Une transition 245 expliquée plus loin dans le texte permettant d'activer un mode semi autonome, est éligible à la validation indifféremment à partir d'une conjonction logique de l'étape 242 et de l'étape 244 ou d'une conjonction logique de l'étape 244 et de l'étape 246.

La transition 245 pour activer le mode semi autonome, est aussi éligible à la validation à partir d'une conjonction logique de l'étape 244 et de l'étape 248 d'arrêt automatique qui est activée par la transition 247 validée en absence d'intervention du conducteur humain alors que le véhicule approche une fin de zone de conduite possible en mode autonome comme affiché en étape 246.

A tout moment à partir de l'étape 246 ou de l'étape 248 tant que l'étape 250 n'est pas atteinte, la transition 245 est validée lorsque le système automatisé détecte un couple appliqué au volant ou un appui sur la pédale de frein ou d'accélérateur.

En d'autres termes, le conducteur humain peut reprendre en main le véhicule à tout moment et contrer ainsi le ralentissement enclenché en étape 248, notamment pour accélérer le véhicule et poursuivre sa route en mode manuel.

Une validation de la transition 245 à partir de l'étape 244 de conduite en mode autonome en conjonction avec l'une ou l'autre des étapes 246 et 248, active l'étape 340 de conduite en mode semi autonome qui provoque un ralentissement du véhicule similaire à celui de l'étape 248 ou plus prononcé qu'en étape 248 de façon à inciter fortement le conducteur humain à reprendre la totalité du contrôle de conduite du véhicule.

A partir de l'étape 244 de mode autonome activé, la transition 245 est validée par une manifestation de présence du conducteur humain lorsqu'il veut reprendre le contrôle du véhicule en mode manuel de conduite.

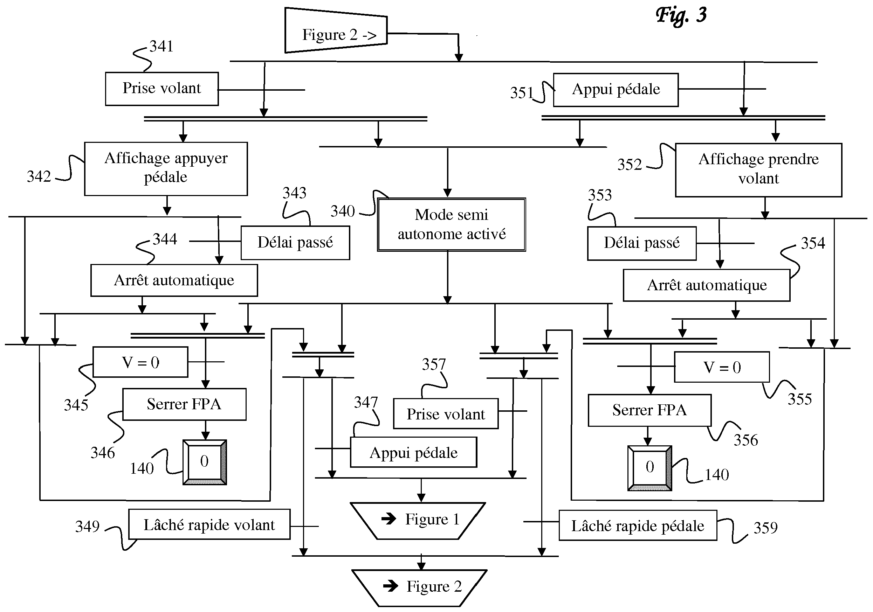

Une validation de la transition 245 active une étape 340 de conduite en mode semi autonome expliqué à présent en référence à la figure 3.

Plus précisément, la transition 245 regroupe en fait deux transitions de reprise en main par le conducteur humain. Une transition 341 est validée lorsque le système automatisé détecte un couple appliqué au volant par le conducteur humain pour reprendre le contrôle du déplacement latéral. Il est possible d'utiliser à cet effet par exemple le signal de couple appliqué au volant de la direction assistée. Dans une variante possible, le système automatisé détecte une présence de préhension du volant par le conducteur humain au moyen de capteurs tactiles disposés sur le volant. Une transition 351 est validée lorsque le système automatisé détecte un effort appliqué sur la pédale de frein ou d'accélérateur par le conducteur humain pour reprendre le contrôle du déplacement longitudinal.

Une validation de la transition 341 active une étape 342 d'alarme en conjonction logique avec l'étape 340 de conduite en mode semi autonome. L'étape 342 d'alarme consiste à demander au conducteur humain de reprendre rapidement en main le déplacement longitudinal qui continue momentanément à être contrôlé par le système automatisé, en appuyant sur la pédale de frein ou d'accélérateur, au moyen d'un affichage visuel et/ou d'un message sonore.

Simultanément dans l'une des étapes 340 ou 342, le programme d'ordinateur arme une temporisation pour mesurer un délai qui sépare la reprise des pédales de la reprise du volant.

Une transition 343 est validée lorsque le délai est dépassé.

Une validation de la transition 343 active une étape 344 d'arrêt automatique qui consiste à freiner le véhicule lorsque le conducteur humain ne reprend pas rapidement en main le déplacement longitudinal qui continue à être contrôlé par le système automatisé. Pendant le freinage du véhicule en étape 344, le système automatisé prend en compte la commande de direction qui résulte du couple appliqué sur le volant par le conducteur humain. Le ralentissement du véhicule est suffisamment dissuasif pour inciter le conducteur humain à reprendre rapidement le contrôle intégral du véhicule.

Une transition 345 est validée lorsque le véhicule atteint une vitesse nulle.

Une validation de la transition 345 active une étape 346 qui consiste à serrer le frein de parking automatique et à retourner dans l'étape initiale 140.

A tout moment à partir de l'étape 342 ou de l'étape 344 tant que l'étape 346 n'est pas atteinte, une transition 347 est validée lorsque le système automatisé détecte un appui sur la pédale de frein ou d'accélérateur.

Une validation de la transition 347 à partir de l'étape 340 de conduite en mode semi autonome en conjonction avec les étapes 342 et 344, réactive l'étape 144 de conduite en mode manuel expliquée précédemment en référence à la figure 1.

Une validation de la transition 351 active une étape 352 d'alarme en conjonction logique avec l'étape 340 de conduite en mode semi autonome. L'étape 352 d'alarme consiste à demander au conducteur humain de reprendre rapidement en main le déplacement latéral qui continue momentanément à être contrôlé par le système automatisé, en agrippant le volant, au moyen d'un affichage visuel et/ou d'un message sonore.

Simultanément dans l'une des étapes 340 ou 352, le programme d'ordinateur arme une temporisation pour mesurer un délai qui sépare la reprise du volant de la reprise des pédales.

Une transition 353 est validée lorsque le délai est dépassé.

Une validation de la transition 353 active une étape 354 d'arrêt automatique qui consiste à freiner le véhicule lorsque le conducteur humain ne reprend pas rapidement en main le déplacement latéral qui continue à être contrôlé par le système automatisé. Pendant le freinage du véhicule en étape 344, le système automatisé prend en compte la commande de freinage qui résulte de la pression appliquée sur la pédale de frein par le conducteur humain. Cependant une détection de pression sur la pédale d'accélération est sans effet sur le freinage imposé dans l'étape 354. Le ralentissement du véhicule est suffisamment dissuasif pour inciter le conducteur humain à reprendre rapidement le contrôle intégral du véhicule.

Une transition 355 est validée lorsque le véhicule atteint une vitesse nulle.

Une validation de la transition 355 active une étape 356 qui consiste à serrer le frein de parking automatique et à retourner dans l'étape initiale 140.

A tout moment à partir de l'étape 352 ou de l'étape 354 tant que l'étape 356 n'est pas atteinte, une transition 357 est validée lorsque le système automatisé détecte un couple appliqué manuellement sur le volant.

Une validation de la transition 357 à partir de l'étape 340 de conduite en mode semi autonome en conjonction avec les étapes 352 et 354, réactive l'étape 144 de conduite en mode manuel expliquée précédemment en référence à la figure 1.

Dans une variante de réalisation, la transition 355 et l'étape 356 peuvent être remplacées respectivement par la transition 345 et l'étape 356 qui leur sont semblables.

Ainsi le retour en mode manuel de conduite pour sortir du mode autonome de conduite en passant par le mode semi autonome, est activé lorsque le conducteur humain reprend en main le déplacement longitudinal et le déplacement latéral. Le passage transitoire dans le mode autonome est éphémère si le conducteur humain reprend en main simultanément ou quasi simultanément, le déplacement longitudinal et le déplacement latéral, les transitions 347 et 357 étant immédiatement validées à la suite des transitions 341 et 351.

Le mode optionnel de mise en œuvre du procédé présenté ici en référence à la figure 3, offre la possibilité de revenir au mode autonome de conduite lorsque la reprise en main d'une commande par le conducteur humain, n'est pas suffisamment affirmée pour marquer une volonté ferme du conducteur humain de retourner en mode manuel de conduite.

Dans l'étape 342, le système automatisé mémorise temporairement un niveau maximal de couple appliqué au volant depuis la validation de la transition 341 et arme une temporisation à courte durée, par exemple de l'ordre de trois secondes.

Une transition 349 de lâcher rapide de volant, est validée lorsque le niveau maximal de couple mémorisé temporairement est inférieur à un seuil prédéfini et que le conducteur humain relâche rapidement son contrôle sur le déplacement latéral avant épuisement de la courte durée de la temporisation.

Dans l'étape 352, le système automatisé mémorise temporairement un niveau maximal de pression appliquée sur l'une des pédales depuis la validation de la transition 351 et arme une temporisation à courte durée, par exemple de l'ordre de trois secondes.

Une transition 359 de lâcher rapide de pédale, est validée lorsque le niveau maximal de pression mémorisé temporairement est inférieur à un seuil prédéfini et que le conducteur humain relâche rapidement son contrôle sur le déplacement longitudinal avant épuisement de la courte durée de la temporisation.

Une validation de la transition 349 ou de la transition 359 à partir de l'étape 340 de conduite en mode semi autonome, réactive alors l'étape 244 de conduite en mode autonome expliquée ci-dessus en référence à la figure 2.

La sortie du mode autonome est réalisable à tout instant à l'initiative du conducteur humain en passant par le mode semi autonome, de manière réversible ou irréversible en fonction de l'existence ou non des transitions 349, 359.

D'autres sorties du mode autonome peuvent être envisagées sans sortir du cadre de la présente invention, quelle que soit la structure du mode autonome choisie.

## Revendications

1. Procédé de fonctionnement d'un véhicule comportant au moins une étape (144) de conduite en mode manuel dans laquelle un déplacement longitudinal et un déplacement latéral sont contrôlés par un conducteur humain et au moins une étape (244) de conduite en mode autonome dans laquelle le déplacement longitudinal et le déplacement latéral sont contrôlés par un système automatisé, comprenant :

   - une étape (246) d'alerte du conducteur humain activée au moins en mode autonome lorsque le système automatisé reçoit (243) une première distance (D1) qui sépare le véhicule d'une fin de zone dans laquelle le mode autonome est autorisé ; et
   - une étape (248) d'arrêt automatique du véhicule avant d'atteindre la fin de zone, activée en mode autonome lorsque le conducteur humain ne reprend pas en main le contrôle du véhicule après réception de ladite première distance (D1) par le système automatisé ;

**caractérisé en ce que** le système automatisé calcule à partir d'une vitesse maximale autorisée sur ladite première distance (D1), une deuxième distance (D2) permettant d'arrêter le véhicule en fonction d'une décélération accédée et/ou calculée par le système automatisé pour être utilisée dans l'étape (248) d'arrêt automatique.

2. Procédé selon la revendication 1, dans lequel l'étape (248) d'arrêt automatique du véhicule est activée lorsque ladite première distance (D1) est inférieure ou égale à ladite deuxième distance (D2).

3. Procédé selon l'une des revendications 1 à 2, dans lequel ladite décélération est de valeur calibrée constante pour le véhicule et ladite deuxième distance (D2) comprend une première longueur proportionnelle à un carré de vitesse du véhicule et inversement proportionnelle au double de ladite décélération.

4. Procédé selon la revendication 3, dans lequel ladite deuxième distance (D2) comprend une deuxième longueur fixe ajoutée à ladite première longueur.

5. Procédé selon l'une des revendications 1 à 4, dans lequel ladite décélération est de valeur suffisamment faible pour ne pas nuire au confort des passagers du véhicule.

6. Programme d'ordinateur comprenant des instructions de code de programme pour l'exécution des étapes du procédé selon l'une des revendications 1 à 5 lorsque ledit programme est exécuté sur un ordinateur.

7. Système automatisé comprenant un ordinateur dans lequel est installé un programme d'ordinateur selon la revendication 6.

8. Véhicule, notamment véhicule automobile, comprenant un système automatisé selon la revendication 7.

**Patentansprüche**

1. Verfahren zum Betrieb eines Fahrzeugs, welches wenigstens einen Schritt (144) des Fahrens im manuellen Modus, in welchem eine Längsbewegung und eine seitliche Bewegung von einem menschlichen Fahrer gesteuert werden, und wenigstens einen Schritt (244) des Fahrens im autonomen Modus, in welchem die Längsbewegung und die seitliche Bewegung von einem automatisierten System gesteuert werden, aufweist, umfassend:

- einen Schritt (246) der Warnung des menschlichen Fahrers, der wenigstens im autonomen Modus aktiviert wird, wenn das automatisierte System (243) eine erste Entfernung (D1) empfängt, welche das Fahrzeug von einem Ende des Bereichs trennt, in welchem der autonome Modus zugelassen ist; und
- einen Schritt (248) des automatischen Anhaltens des Fahrzeugs vor dem Erreichen des Endes des Bereichs, der im autonomen Modus aktiviert wird, wenn der menschliche Fahrer nach Empfang der ersten Entfernung (D1) durch das automatisierte System die Kontrolle des Fahrzeugs nicht wieder übernimmt;

**dadurch gekennzeichnet, dass** das automatisierte System aus einer maximalen Geschwindigkeit, die auf der ersten Entfernung (D1) zulässig ist, eine zweite Entfernung (D2), die es ermöglicht, das Fahrzeug anzuhalten, in Abhängigkeit von einer erreichten und/oder von dem automatisierten System berechneten Verzögerung berechnet, damit sie im Schritt (248) des automatischen Anhaltens verwendet wird.

2. Verfahren nach Anspruch 1, wobei der Schritt (248) des automatischen Anhaltens aktiviert wird, wenn die erste Entfernung (D1) kleiner oder gleich der zweiten Entfernung (D2) ist.

3. Verfahren nach einem der Ansprüche 1 bis 2, wobei die Verzögerung für das Fahrzeug einen konstanten kalibrierten Wert hat und die zweite Entfernung (D2) eine erste Länge umfasst, die proportional zu einem Quadrat der Geschwindigkeit des Fahrzeugs und umgekehrt proportional zum Doppelten der Verzögerung ist.

4. Verfahren nach Anspruch 3, wobei die zweite Entfernung (D2) eine feste zweite Länge umfasst, die zur ersten Länge hinzugefügt wird.

5. Verfahren nach einem der Ansprüche 1 bis 4, wobei die Verzögerung einen ausreichend niedrigen Wert hat, um den Komfort der Insassen des Fahrzeugs nicht zu beeinträchtigen.

6. Computerprogramm, welches Programmcodeanweisungen zur Ausführung der Schritte des Verfahrens nach einem der Ansprüche 1 bis 5, wenn das Programm auf einem Computer ausgeführt wird, umfasst.

7. Automatisiertes System, welches einen Computer umfasst, auf welchem ein Computerprogramm nach Anspruch 6 installiert ist.

8.  Fahrzeug, insbesondere Kraftfahrzeug, welches ein automatisiertes System nach Anspruch 7 umfasst.


**Claims**

1.  Method for operating a vehicle comprising at least one step (144) of driving in manual mode in which a longitudinal displacement and a lateral displacement are controlled by a human driver and at least one step (244) of driving in autonomous mode in which the longitudinal displacement and the lateral displacement are controlled by an automated system, comprising:

    - a step (246) of alerting the human driver activated at least in autonomous mode when the automated system receives (243) a first distance (D1) which separates the vehicle from an end of zone in which the autonomous mode is authorized; and
    - a step (248) of automatically stopping the vehicle before reaching the end of zone, activated in autonomous mode when the human driver does not take back control of the vehicle after the reception of said first distance (D1) by the automated system;

    **characterized in that** the automated system computes, from a maximum speed authorized over said first distance (D1), a second distance (D2) making it possible to stop the vehicle as a function of a deceleration accessed and/or computed by the automated system to be used in the automatic stopping step (248).

2.  Method according to Claim 1, in which the step (248) of automatically stopping the vehicle is activated when said first distance (D1) is less than or equal to said second distance (D2).

3.  Method according to one of Claims 1 to 2, in which said deceleration is of constant gauged value for the vehicle and said second distance (D2) comprises a first length proportional to a square of speed of the vehicle and inversely proportional to twice said deceleration.

4.  Method according to Claim 3, in which said second distance (D2) comprises a fixed second length added to said first length.

5.  Method according to one of Claims 1 to 4, in which said deceleration is of a value low enough to avoid prejudicing the comfort of the passengers of the vehicle.

6.  Computer program comprising program code instructions for the execution of the steps of the method according to one of Claims 1 to 5 when said program is run on a computer.

7.  Automated system comprising a computer in which is installed a computer program according to Claim 6.

8.  Vehicle, notably a motor vehicle, comprising an automated system according to Claim 7.

Fig. 1

**Fig. 2**

Figure 1 ->

241

Absence D1

243 Réception D1

242 Affichage mode autonome assuré

246 Affichage approche fin de zone & calcul D2

244 Mode autonome activé

247

D1 ≤ D2

248

Arrêt automatique

V = 0

249

245 Présence

→ Figure 3

Serrer FPA

250

0

140

EP 3 003 812 B1

**Fig. 3**

EP 3 003 812 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8352110 B

- EP 2314490 A